Europäisches Patentamt

European Patent Office

Office européen des brevets

(11) Publication number: **0 173 433**

**B1**

(12) **EUROPEAN PATENT SPECIFICATION**

(45) Date of publication of patent specification: 28.02.90

(21) Application number: 85304730.6

(22) Date of filing: 02.07.85

(51) Int. Cl.⁵: **G 05 D 3/00, B 60 R 1/06**

(54) Remote control system.

(30) Priority: 21.07.84 GB 8418649

(43) Date of publication of application:
05.03.86 Bulletin 86/10

(45) Publication of the grant of the patent:
28.02.90 Bulletin 90/09

(84) Designated Contracting States:
DE FR GB

(56) References cited:
DE-A-2 139 852
US-A-3 725 835
US-A-4 191 053

PATENT ABSTRACTS OF JAPAN, vol. 8, no. 64
(M-285)1501r, 27th March 1984; & JP - A - 58
214432

(73) Proprietor: B.S.G. Overseas Limited
Burgess House 1270 Coventry Road
Birmingham B25 8BB (GB)

(72) Inventor: Desforges, Patrick Jean James
65 rue du Docteur Siffre
F-77930 Perthes-en-Gatenais (FR)
Inventor: Harry, Jean-Michel
68 avenue de la Foset
F-77210 Avon (FR)
Inventor: Cluet, Yves
46 rue de la République
F-77210 Avon (FR)

(74) Representative: Hollinghurst, Antony
Britax Limited Patent Department
Chichester West Sussex PO19 2AQ (GB)

Courier Press, Leamington Spa, England.

## Description

This invention relates to a remote control system for adjusting the orientation of a controlled member and has particular application to the adjustment of the orientation of a rearview mirror for a vehicle.

Both electric and hydraulic remote control systems have been proposed for adjusting the orientation of an exterior rearview mirror from inside a vehicle where the control is at some considerable distance from the mirror, for example in the case of a mirror mounted on the opposite side of the vehicle to the driver (see for example US—A—4,167,306 and FR—A—2,424,834). In general, electrically operated mechanisms impose the least constraints on the relative positions of the mirrors and their controls but suffer from the disadvantage of being relatively expensive because it is necessary either to provide two electric motors for effecting adjustments about two mutually orthogonal axes or to provide an electrically operated clutch mechanism to enable a single motor to effect adjustment about each such axis in turn. The present invention aims to provide an electrically operated remote control system which is simplier and cheaper to manufacture than a system involving electric motors.

Shape memory alloys are well known. Such alloys have the property of existing in at least two different phases in the solid state, depending on temperature. In one phase, such alloys have a structure which is relatively resilient so that the material returns to its original shape after removal of a deforming force. In the other phase, the material is less resilient and remains in its deformed state after the deforming force is removed. However, if the material is deformed while in its second state and then transformed, by a change of temperature, to its first state, the material recovers its original shape. For example, alloys of nickel and titanium have an austenitic phase when above a critical temperature and a martensitic phase when below that critical temperature. The electrical resistivity of this alloy is such that a spring formed therefrom can conveniently be transformed from its martensitic phase to its austenitic phase by passing an electric current through it. The application of a component formed of a shape memory alloy to the control of the orientation of a mirror is disclosed in Patent Abstracts of Japan, vol 8, no. 64 (M—285) [1501] which summarises JP—A—58—214432.

According to the invention, remote control means for adjusting the orientation of a controlled member comprises a pivot bearing for supporting the controlled member on a base member, means for applying a frictional force to the pivot bearing so as to resist pivotal movement of the controlled member, at least two springs formed of a shape memory alloy and connected to exert a force between the controlled member and the base member on opposite sides of the pivot bearing, and means for selectively heating each of the springs, each spring being so constructed so as to exert sufficient force to overcome the friction of the pivot bearing when the alloy is in its resilient phase but insufficient force to overcome said friction when the alloy is in its nonresilient phase.

Preferably the means for heating each of the springs comprises means for passing an electric current therethrough.

If the pivot bearing is arranged to permit angular movement about only one axis then two springs of shape memory alloy are sufficient, one being disposed on each side of the axis. On the other hand, if the pivot bearing is arranged to permit angular movement about two mutually orthogonal axis, at least three springs are required and it will usually be convenient to provide four springs arranged in two pairs, the springs of each pair being disposed on opposite sides of a respective orthogonal axis.

An embodiment of the invention will now be described, by way of example, with reference to the accompanying drawings in which:

Figure 1 is a schematic diagram illustrating the principle of operation of the invention;

Figure 2 is a cross-sectional view of a rearview mirror incorporating control means in accordance with the invention;

Figure 3 is a fragmentary cross-sectional view, similar to Figure 2 but having an alterative form of spring;

Figure 4 is a perspective view of the spring of the embodiment illustrated in Figure 3;

Figure 5 is a cross-sectional view, similar to Figure 3, illustrating yet another form of spring;

Figure 6 is a perspective view of the spring shown in Figure 4;

Figure 7 is a cross-sectional view, similar to Figures 3 and 4, showing a further form of spring in accordance with the invention; and

Figures 8, 9 and 10 are graphs of electrical current against time illustrating alternative control current wave forms.

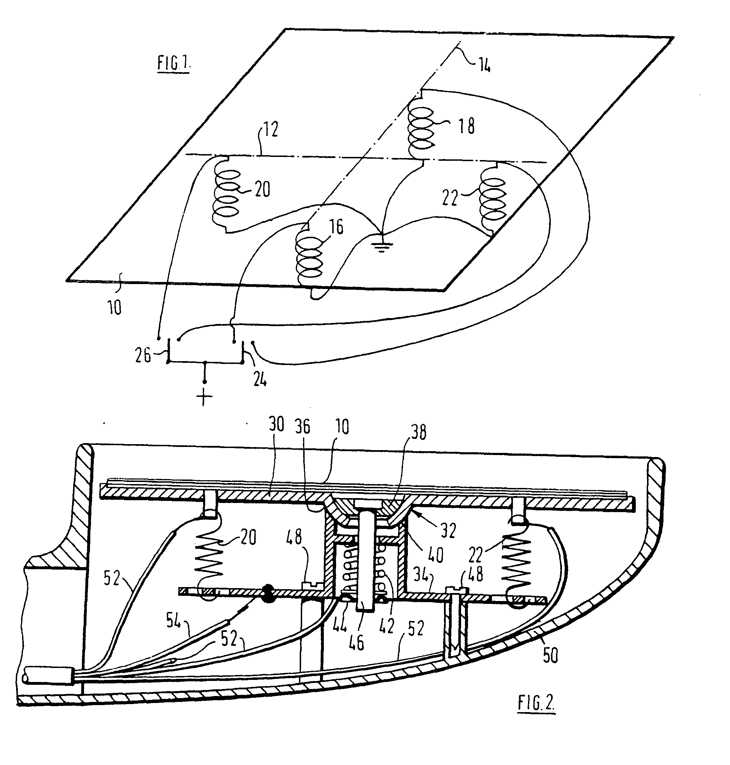

Referring first to Figure 1, the reflective member 10 of a rearview mirror 10 is pivotally mounted for angular movement about two orthogonal axes 12 and 14. The pivotal mounting (not shown) incorporates means for providing frictional resistance to movement about each of the axes 12 and 14. A first pair of tension springs 16 and 18 is symmetrically disposed with respect to the axis 12 while a second pair of such springs 20 and 22 is symmetrically disposed with respect to the axis 14. A switch 24 is arranged to pass an electric current either through the spring 16 or through the spring 18 while a switch 26 is arranged to pass a current either through the spring 20 or through the spring 22. Both of the switches 24 and 26 have central "off" positions in which no current is applied to either spring.

The four springs 16, 18, 20 and 22 are substantially identical to one another and are formed from a shape memory alloy such as a nickel-titanium alloy or a copper-zinc-aluminium alloy.

In the absence of an applied current to any of the springs, all four springs are in their non-elastic phase and the friction at the pivotal mounting ensures that the mirror 10 remains in the orientation to which it was last set. If sufficient current is applied by the switch 24 to the spring 16 to heat the latter to a temperature at which it changes to its resilient phase, the resulting tension will be sufficient to pull the front edge of the mirror 10 (as viewed in Figure 1) downwards. When the switch 24 is moved back to its "off" position, the mirror 10 remains in its new position until such time as a current is applied to one of the other three springs 18, 20 and 22. Thus, the orientation of the mirror about the axes 12 and 14 can be adjusted at will by suitable manipulation of the switches 24 and 26. No electric current is required to maintain the mirror in the position to which it is set.

Referring now to Figure 2, the mirror 10 is mounted on a mirror carrier 30 which is supported by a bearing 32 on a base plate 34. The bearing 32 comprises a part-spherical flange 36 formed on the mirror carrier 30 and engaging between a part-sperical convex member 38 and a part-spherical socket 40. A conventional compression spring 42 (which is elastic at all normal operating temperatures) engages between the socket 40 and a washer 44 carried by a stem 46 on which the convex member 38 is mounted. The spring 42 thus applies a predetermined frictional force to resist angular movement of the mirror carrier 30. The base plate 34 is secured, by screws 48 to the interior of a mirror housing 50.

The springs 20 and 22, formed of a shape memory alloy, extend between the mirror carrier 30, which is of an electrically insulating material, and the base plate 34, which is electrically conductive. The other two springs 16 and 18 are similarly arranged although they are not visible in Figure 2. Respective wires 52 are connected to the ends of each of the springs 16, 18, 20 and 22 which are attached to the mirror carrier 30. The base plate 34, which is earthed by means of a wire 54, serves as a common return conductor for all four springs.

The mirror illustrated in Figure 2 operates in the manner already described with reference to Figure 1, the friction produced by the bearing 32 being sufficient to retain the mirror 10 in the position to which it has been set in the absence of an applied current in any of the springs 16, 18, 20 and 22.

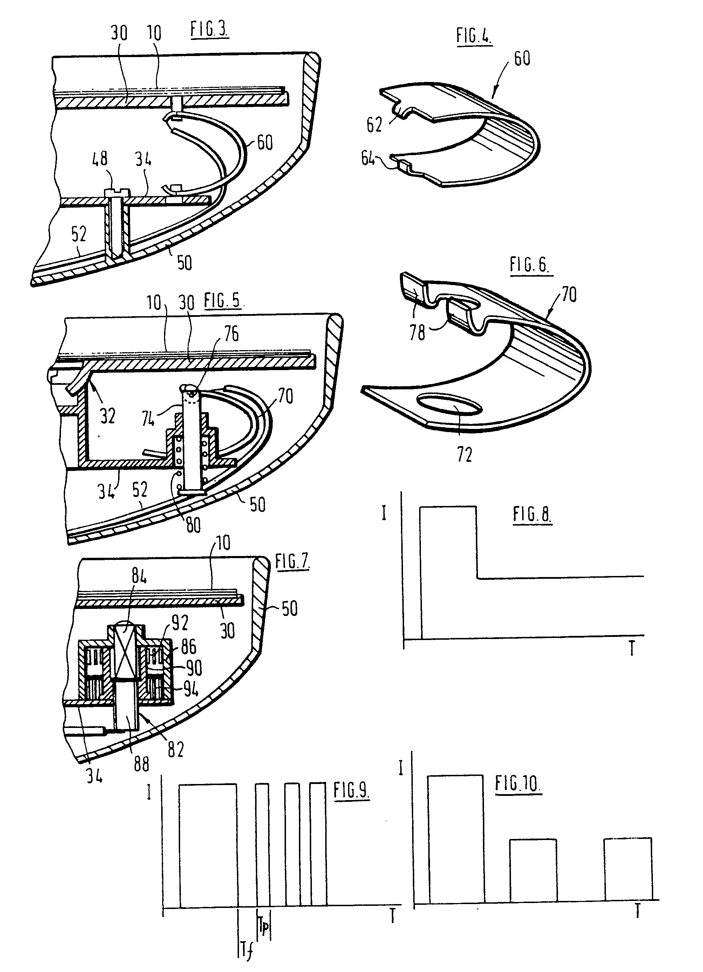

In the embodiment illustrated in Figures 3 and 4, each of the coil springs 16, 18, 20 and 22 of Figure 2 is replaced by a respective bowed leaf spring such as the spring 60. As can be seen in Figure 4, the spring 60 has a lug 62 at one end for engagement with the mirror carrier 30 and a lug 64 at the other end for engagement with the base plate 34. The operation of the control mechanism is similar to that already described.

In the embodiments of Figures 2 to 4, the four tension springs may be replaced by compression springs whose natural length is greater than the space between the mirror carrier 30 and the base plate 34. Application of an electric current to a particular spring then causes the corresponding side of the mirror 10 to move away from the base plate 34 rather than towards it.

Figures 5 and 6 illustrate another embodiment of the invention having four compression springs of a shape memory alloy, such as the spring 70. The region of each of the springs 70 which engages with the base plate 34 has a hole 72 through which a piston 74 projects. The end of the piston 74 closer to the mirror carrier 30 has laterally projecting studs 76 which engage with hook-like formations 78 on the other end of the spring 70. A conventional compression spring 80 engages between the other end of the piston 74 and the base plate 34 so as to bias the piston 74 away from the mirror carrier 30. With this arrangement, the piston 74 is normally held clear of the mirror carrier 30 by the spring 80. Application of a current to the spring 70 causes it to change state and acquire sufficient resilience to overcome the spring 80 and move the piston into engagement with the mirror carrier 30, thus altering the orientation of the mirror 10. When the current is removed, the spring 80 withdraws the piston 74 out of engagement with the mirror carrier 30. Consequently any residual resilience in the spring 70 cannot have any unintended effect on the orientation of the mirror 10.

In Figure 7, the piston 74 of Figure 5 is replaced by a rod 82 having a portion 84 of square cross-section at its end nearer to the mirror carrier 30. The portion 84 projects through a correspondingly shaped aperture in a casing 86 secured to the base plate 34, thus permitting axial movement of the rod 82 but preventing angular movement thereof about its axis. The other end of the rod 82 comprises a screw-threaded portion 88 which engages in a nut 90. The nut 90 is constrained against axial movement by the casing 86 on the one hand and the base plate 34 on the other. A conventional spiral spring 92 is arranged to bias the nut 90 to rotate in a direction related to the screw-thread 88 such as to withdraw the rod 82 to its maximum distance from the mirror carrier 30. A spiral spring 94, formed of a shape memory alloy, is arranged to bias the nut 90 in the opposite sense and has sufficient strength, when heated to its resilient phase, to overcome the spiral spring 92, thus moving the rod 88 upwards into engagement with the mirror carrier 30 so as to change the orientation of the mirror 10. When the spring 94 cools following disconnection of the electric current, the spring 92 withdraws the rod 82 to its position furthest from the mirror carrier 30.

The choice of the appropriate level of the electric current applied to heat the springs of shape memory alloy is a compromise. On the one hand, the level should be high enough to ensure that movement of the mirror carrier commences without undue delay. On the other hand, it is important to avoid overheating which could both cause the mirror to overshoot its desired position and delay the time before which the spring has cooled sufficiently for movement in the other direction to be possible. Turning now to Figure 8, the heating current may initially be applied at a relatively high level for a predetermined time and then reduced to a lower level just sufficient to hold the alloy above its critical temperature. Consequently, when the current is disconnected, the temperature of the alloy falls to below the critical temperature at which the change of phase takes place with the minimum delay.

Turning to Figure 9, instead of decreasing the level of the current after the initial heating period, the steady current may be replaced by a series of pulses, the ratio of the duration Tp to the pulse repetition frequency Tf determining the net power applied. Alternatively, as illustrated in Figure 10, the heating current may be applied as pulses of continuous duration, the amplitude of which is decreased after the initial heating period.

An alternative approach is to apply a continuous current to all the springs which are formed of a shape memory alloy sufficient to maintain them just below the temperature at which they change phase. When movement of the mirror is required, the current through the appropriate spring is slightly increased. While this arrangement gives a relatively rapid response, it has the disadvantage of increasing the electricity consumption.

## Claims

1. Remote control means for adjusting the orientation of a controlled member (10) comprising a pivot bearing (32) for supporting the controlled member (10) on a base member (34), and means for applying a frictional force to the pivot bearing (32) so as to resist pivotal movement of the controlled member (10), characeised by at least two memory springs (16, 18, 20, 22, 60, 70, 94) formed of a shape memory alloy and connected to exert a force between the controlled member (10) and the base member (34) on opposite sides of the pivot bearing (32) and means for selectively heating each of the memory springs (16, 18, 20, 22, 60, 70, 94), each memory spring (16, 18, 20, 22, 60, 70, 94) being so constructed so as to exert sufficient force to overcome the friction of the pivot bearing (32) when the alloy is in its resilient phase but insufficient force to overcome said friction when the alloy is in its nonresilient phase.

2. Remote control means according to claim 1, wherein the means for heating each of the memory springs (16, 18, 20, 22, 60. 70, 94) comprises means (24, 26) for passing an electric current therethrough.

3. Remote control means according to claim 1 or 2, wherein the pivot bearing (32) is arranged to permit angular movement about two mutually orthogonal axes, at least three memory springs (16, 18, 20, 22, 60, 70, 94) being symmetrically disposed round the pivot bearing (32).

4. Remote control means according to claim 1, 2 or 3, wherein a respective second spring (80, 92), formed of a material the same elasticity both above and below the temperature at which the shape memory alloy changes phase, is connected so as to oppose each of the memory springs (70, 94).

5. Remote control means according to claim 4, wherein a respective screw-threaded rod (82) for each of the memory springs (94) engages with one of the controlled member (10) and the base member (34) and a respective screw-threaded nut (90) is connected to the other of the controlled member (10) and the base member (34) and engages with the rod (82) so that relative rotation of the rod (82) and the nut (90) causes movement of the controlled member (10) relative to the base member (34), the memory spring (94) being connected between the rod (82) and the nut (90) so as to tend to cause relative rotation in one direction and the second spring (92) being connected between the rod and the nut (90) so as to tend to cause relative rotation in an opposite direction.

6. Remote control means according to any preceding claim, wherein the controlled member is the mirror (10) of a vehicle rearview mirror assembly.

## Patentansprüche

1. Fernsteuereinrichtung zur Einstellung der Ausrichtung eines Regelstreckenelementes (10) mit einem Drehlager (32) zur Lagerung des Regelstreckenelements (10) auf einem Trägerelement (34) und mit Mitteln zum Aufbringen einer Reibungskraft auf das Drehlager (32), um der Schwenkbewegung des Regelstreckenelements (10) standzuhalten, gekennzeichnet durch mindestens zwei Memory-Federn (16, 18, 20, 22, 60, 70, 94), die aus einer Memory-Legierung gebildet sind und an entgegengesetzten Seiten des Drehlagers (32) angeschlossen sind, um eine Kraft zwischen dem Regelstreckenelement (10) und dem Trägerelement (34) des Drehlagers (32) auszuüben, und durch ein Mittel zum selektiven Beheizen jeder der Memory-Federn (16, 18, 20, 22, 60, 70, 94), wobei jede Memory-Feder (16, 18, 20, 22, 60, 70, 94) so gestaltet ist, daß eine zur Überwindung der Reibung des Drehlagers (32) ausreichende Kraft wirkt, wenn sich die Legierung in ihrer elastischen Phase befindet, die Kraft zur Überwindung der Reibung aber nicht ausreichend ist, wenn sich die Legierung in ihrer nicht-elastischen Phase befindet.

2. Fernsteuereinrichtung nach Anspruch 1, bei der das Mittel zur Beheizung jeder der Memory-Federn (16, 18, 20, 22, 60, 70, 94) Mittel (24, 26) zum Hindurchleiten eines elektrischen Stromes umfaßt.

3. Fernsteuereinrichtung nach Anspruch 1 oder 2, bei der das Drehlager (32) angeordnet ist, um eine Winkelbewegung um zwei beiderseitig senkrechte Achsen zuzulassen, wobei mindestens drei Memory-Federn (16, 18, 20, 22, 60, 70, 94) symmetrisch um das Drehlager (32) angeordnet sind.

4. Fernsteuereinrichtung nach Anspruch 1, 2 oder 3, bei der jeweils eine zweite Feder (80, 92) angeschlossen ist, die aus einem Material gebilet ist, daß sowohl oberhalb als auch unterhalb der Temperatur bei welcher die Memory-Legierung ihren Phasenzustand ändert, die gleiche Elastizität aufweist, um jeder der Memory-Federn (70, 94) gegenüberzuliegen.

5. Fernsteuereinrichtung nach Anspruch 4, bei der jeweils ein Schraubgewinde-Stab (82) für jede der Memory-Federn (94) an einem der Regelstrekken-(10) und Trägerelemente (34) angreift und jeweils eine Schraubgewinde-Mutter (90) mit dem anderen der Regelstrecken-(10) und Trägerelemente (34) verbunden ist und so an dem Stab (82) angreift, daß eine Drehung zwischen dem Stab (82) und der Mutter (90) eine zu dem Trägerelement (34) relative Bewegung des Regelstreckenelements (10) verursacht, wobei die Memory-Feder (94) zwischen dem Stab (82) und der Mutter (90) angeschlossen ist, um eine relative Drehung in einer Richtung zu verursachen, und wobei die zweite Feder (92) zwischen dem Stab und der Mutter (90) angeschlossen ist, um eine relative Drehung in einer entgegengesetzten Richtung zu verursachen.

6. Fernsteuereinrichtung nach einem der vorhergehenden Ansprüche, bei der das Regelstrekkenelement der Spiegel (10) eines Rückblickspiegels für ein Kraftfahrzeug ist.

**Revendications**

1. Système de commande à distance servant à régler l'orientation d'un élément commandé (10) et comportant une crapaudine (32) servant à supporter l'élément commandé (10) sur un élément de base (34), et des moyens pour appliquer une force de frottement à la crapaudine (32) de manière à s'opposer à un mouvement de rotation de l'élément commandé (10), caractérisé par au moins deux ressorts (16, 18, 20, 22, 60, 70, 94) à mémoire, réalisés en un alliage possédant une mémoire de forme et raccordés de manière à exercer une force entre l'élément commandé (10) et l'élément de base (34) sur les côtés opposés de la crapaudine (32) et des moyens pour chauffer de façon sélective chacun des ressorts (16, 18, 20, 22, 60, 70, 94) à mémoire, chacun de ces ressorts (16, 18, 20, 22, 60, 70, 94) à mémoire étant agencé de manière à appliquer une force suffisante pour vaincre le frottement de la crapaudine (32) lorsque l'alliage est dans sa phase élastique, mais une force insuffisante pour vaincre ledit frottement lorsque l'alliage est dans sa phase non élastique.

2. Système de commande à distance selon la revendication 1, dans lequel les moyens servant à chauffer chacun des ressorts (16, 18, 20, 22, 60, 70, 94) à mémoire comprennent des moyens (24, 26) servant à faire circuler un courant électrique dans les ressorts.

3. Système de commande à distance selon la revendication 1 ou 2, dans lequel la crapaudine (32) est agencée de manière à permettre un déplacement angulaire autour de deux axes perpendiculaires entre eux, au moins trois ressorts (16, 18, 20, 22, 60, 70, 94) à mémoire étant disposés symétriquement autour de la crapaudine (32).

4. Système de commande à distance selon la revendication 1, 2 ou 3, dans lequel un second ressort respectif (80, 92), constitué en un matériau possédant la même élasticité à la fois au-dessus et au-dessous de la température, à laquelle l'alliage possédant une mémoire de forme change de phase, est raccordé de manière à avoir une action opposée à chacun des ressorts (70, 94) à mémoire.

5. Système de commande à distance selon la revendication 4, dans lequel une tige filetée respective (82) prévue pour chacun des ressorts (94) à mémoire s'applique contre un premier des éléments constitués par l'élément commandé (10) et l'élément de base (34), et un écrou fileté (90) respectif est raccordé à l'autre des éléments constitués par l'élément commandé (10) et l'élément de base (34) est monté sur la tige (82) de sorte qu'une rotation relative à la tige (82) et de l'écrou (90) provoque un déplacement de l'élément commandé (10) par rapport à l'élément de base (34), le ressort (94), à mémoire, étant installé entre la tige (82) et l'écrou (90) de manière à tendre à provoquer une rotation relative dans un sens, tandis que le second ressort (92) est monté entre la tige et l'écrou (90) de manière à tendre à provoquer une rotation relative dans le sens opposé.

6. Système de commande à distance selon l'une quelconque des revendications, dans lequel l'élément commandé est le miroir (10) d'un rétroviser d'un véhicule.

FIG.1.

14

12

18

20

16

22

10

26

24

+

30  36  10  38

20  48

32

40

22

52

34

48

54

44  42  52

52  46

50

FIG.2.

1

FIG.3.

FIG.4.

FIG.5.

FIG.6.

FIG.7.

FIG.8.

FIG.9.

FIG.10.